Europäisches Patentamt

European Patent Office

Office européen des brevets

(11) Veröffentlichungsnummer: **0 465 828 A2**

## (12) EUROPÄISCHE PATENTANMELDUNG

(21) Anmeldenummer: **91109240.1**

(22) Anmeldetag: **06.06.91**

(51) Int. Cl.⁵: **B29D 30/70**

(30) Priorität: **07.07.90 DE 4021672**

(43) Veröffentlichungstag der Anmeldung:
**15.01.92 Patentblatt 92/03**

(84) Benannte Vertragsstaaten:
**AT BE CH DE DK ES FR GB GR IT LI LU NL SE**

(71) Anmelder: **Continental Aktiengesellschaft
Königsworther Platz 1, Postfach 1 69
W-3000 Hannover 1(DE)**

(72) Erfinder: **Glinz, Michael
Am Graseweg 19
W-3057 Neustadt 1(DE)**

(54) **Verfahren und Vorrichtung zur Herstellung von Gürtelpaketen für Fahrzeugluftreifen.**

(57) Die Erfindung bezieht sich auf ein Verfahren zur Herstellung von Gürtelpaketen für Fahrzeugluftreifen. Um einer automatischen Reifenfertigung besser zugänglich zu sein, wird vorgeschlagen, daß die einzelnen Lagen eines Gürtels auf einer ersten Gürteltrommel aufgewickelt werden, daß danach eine zweite Gürteltrommel und die erste Gürteltrommel axial ineinandergebracht werden, daß die Segmente der zweiten Gürteltrommel das Lagenpaket erfassen, daß anschließend die beiden Gürteltrommeln voneinander entfernt werden, daß auf der ersten Gürteltrommel ein weiteres Lagenpaket erzeugt wird und daß gleichzeitg auf der zweiten Gürteltrommel das erste Lagenpaket durch eventuelle weitere Bandagen und schließlich durch den Laufstreifen zu einem kompletten Laufstreifen/Gürtelpaket vervollständigt wird, das durch bekannte Mittel zum Aufbau eines Reifenrohlings oder zur Zwischenlagerung übernommen wird.

FIG.1

Die Erfindung betrifft ein Verfahren zur Herstellung von Gürtelpaketen für Fahrzeugluftreifen und eine Vorrichtung zur Durchführung des Verfahrens.

Bei bekannten Verfahren wird ein Gürtelpaket für einen Fahrzeugluftreifen auf einer einzigen Gürteltrommel hergestellt. Dieses Gürtelpaket wird dann zu einer Bombierstation transportiert, wo ein zunächst zylindrischer Karkaßkörper in das Gürtelpaket hineinbombiert wird. Für eine möglichst automatische Reifenrohlingsfertigung ist es günstig, das Bombieren der Karkasse und das Herstellen des Gürtelpakets im Bereich einer einzigen Station durchzuführen. Dabei tritt jedoch das Problem auf, daß das Auflegen der Karkasse und das Bombieren in ein Gürtelpaket hinein wesentlich weniger Zeit in Anspruch nimmt als die Fertigung des Gürtelpakets, so daß Leerzeiten an der Bombierstufe entstehen. Der Erfindung liegt deshalb die Aufgabe zugrunde, ein Verfahren zur Herstellung von Gürtelpaketen anzugeben, das besser in eine solche Bombierstufe integrierbar ist, d.h. bei dem die Verfahrensabläufe an der Gürteltrommel und an der Bombierstufe ohne jegliche Zeitverluste stattfinden.

Diese Aufgabe wird erfingungsgemäß dadurch gelöst, daß die einzelnen Lagen eines Gürtels auf einer ersten Gürteltrommel aufgewickelt werden, daß danach eine zweite Gürteltrommel und die erste Gürteltrommel axial ineinandergebracht werden, daß die Segmente der zweiten Gürteltrommel das Lagenpaket erfassen, daß anschließend die beiden Gürteltrommeln voneinander entfernt werden, daß auf der ersten Gürteltrommel ein weiteres Lagenpaket erzeugt wird und daß gleichzeitig auf der zweiten Gürteltrommel das erste Lagenpaket durch eventuelle weitere Bandagen und schließlich durch den Laufstreifen zu einem kompletten Laufstreifen/Gürtelpaket vervollständigt wird, das durch bekannte Mittel zum Aufbau eines Reifenrohlings oder zur Zwischenlagerung übernommen wird. Eine Gürteltrommelvorrichtung zur Durchführung des Verfahrens ist dadurch gekennzeichnet, daß sie eine erste Trommel zum Aufwickeln der Lagen eines Gürtels aufweist, daß sie mit einer zweiten Trommel zur Übernahme und Vervollständigung des Lagenpakets zu einem Gürtelpaket ausgestattet ist, daß die beiden Trommeln durch axiales Verfahren von zumindest einer zur Übernahme eines Lagenpakets ineinanderfahrbar sind und daß die beiden Trommeln unabhängig voneinander antreibbar sind.

Der Kerngedanke der Erfindung besteht darin, die Verfahrensabläufe zur Herstellung von Gürtelpaketen in der Weise auf zwei Gürteltrommeln zu verteilen, daß unterschiedliche Verfahrensschritte zeitgleich ablaufen können. Hierdurch erzielt man den Vorteil, daß die Gürtelpakete in einer kürzeren Zeiteinheit fertiggestellt werden, so daß sie schneller der Bombierstufe zur Verfügung stehen. Die schnellere Fertigung erzielt man dadurch, daß auf einer ersten Gürteltrommel die einzelnen Lagen eines Gürtels gewickelt werden, daß dieses Lagenpaket anschließend von einer zweiten Gürteltrommel übernommen wird und dort unabhängig von der ersten Gürteltrommel durch eventuelles Wikkeln oder Spulen von Abdeckbandagen und durch das anschließende Auflegen eines Laufstreifens vervollständigt wird. Während dieser Vervollständigung des Gürtelpakets werden auf der ersten Gürteltrommel bereits wieder die Lagen eines weiteren Gürtels gewickelt. Zur Übernahme des Lagenpaketes müssen die beiden Gürteltrommeln axial ineinanderfahrbar sein, wobei es grundsätzlich gleich ist, ob die erste Gürteltrommel oder aber die zweite übernehmende Gürteltrommel axial verfahrbar ausgebildet wird. In jedem Fall hat eine der beiden Gürteltrommeln eine Doppelfunktion: Sie wird außer zur Gürtelherstellung auch als Übertragungseinheit eingesetzt. Gemäß einer bevorzugten Ausführungsform der Erfindung ist die zweite übernehmende Gürteltrommel axial verfahrbar ausgebildet, so daß sie in die erste feststehende Trommel hineinfährt und nach Übernahme eines Lagenpakets aus dieser herausbewegt wird. Gemäß einer weiteren Ausführungsform haben die Segmente der zweiten Gürteltrommel eine andere Kontur als die der ersten, z.B. weisen sie außer einem zylindrischen Mittelabschnitt mit größerem Durchmesser zwei kegelige oder kugelförmige Randabschnitte auf.

Die zweite Trommel ist bevorzugt kammartig im dem Sinne ausgebildet, daß zwischen jeweils zwei Segmenten eine Lücke besteht, in die ein Segment der ersten Trommel eingreifen kann. Grundsätzlich kann jedoch auch auf die kammartige Ausbildung verzichtet werden, wenn nur gewährleistet ist, daß im ineinandergefahrenen Zustand der beiden Trommeln die eine kammartige Lücken aufweist, in die die Segmente der anderen Trommel eingreifen können. Um das axiale Ineinanderschieben der beiden Trommeln zu gewährleisten, sind die Segmente der ersten Trommel, die auf Höhe der Segmente der zweiten Trommel liegen, entweder radial nach innen verschiebbar oder wegklappbar ausgebildet. Bei einer ausreichend hohen Anzahl von Segmenten (ca. ab 70) ist es jedoch auch möglich, beide Trommeln kammartig auszubilden. Damit die Vorrichtung für Gürtel unterschiedlicher Dimensionen verwendbar ist, sollten alle Segmente der beiden Trommeln zur Dimensionseinstellung radial verfahrbar sein.

Nachfolgend wird ein Ausführungsbeispiel der Erfindung anhand einer Zeichnung näher erläutert. Es zeigt schematisch

Fig. 1      eine Vorrichtung mit zwei Gürteltrommeln und einem Maschinenständer in einer schematischen Darstellung,

Fig. 2      eine feststehende erste Trommel mit radial verfahrbaren Segmenten in einem Radialschnitt,

Fig. 3 die Trommel der Fig. 2 in einer Seitenansicht,

Fig. 4 die Trommel der Fig. 2 mit radial eingefahrenen Segmenten,

Fig. 5 eine Schemaskizze einer Bombierstation mit einer Gürtelaufbaustation,

Fig. 6 einen Ausschnitt der beiden Gürteltrommeln der Fig. 5 im radial ausgefahrenen Zustand,

Fig. 7 die beiden Gürteltrommeln der Fig. 6, wobei die Segmente der ersten Gürteltrommel radial eingefahren sind,

Fig. 8 die beiden Gürteltrommeln der Fig. 6 im axial zusammengefahrenen Zustand,

Fig. 9 die Gürteltrommelanordnung gemäß Fig. 8, jedoch mit expandierten Segmenten der zweiten Gürteltrommel,

Fig. 10 ein Segment der zweiten Gürteltrommel mit einer Oberfläche mit zylindrischem Mittelteil und kegeligen Randabschnitten,

Fig. 11 zwei weitere Gürteltrommeln im axial auseinandergefahrenen Zustand,

Fig. 12 die beiden Trommeln der Fig. 11 im axial zusammengefahrenen Zustand.

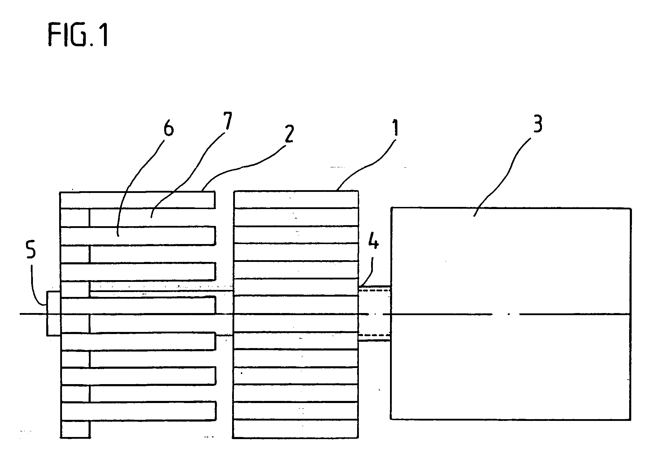

In Fig. 1 ist eine Gürteltrommel-Vorrichtung mit einer ersten Trommel 1 und einer zweiten Trommel 2 dargestellt, die von einem Motor oder zwei Motoren im Maschinenständer 3 antreibbar sind. Die erste Gürteltrommel 1 befindet sich auf einer Hohlwelle 4 und ist in axialer Richtung nicht verschiebbar. Die zweite Gürteltrommel 2 sitzt auf einer konzentrisch zur Welle 4 gelagerten Welle 5 und ist mit ihr axial verschiebbar, so daß sie in die erste Trommel 1 hineinbewegt und aus ihr herausgezogen werden kann. Die zweite Gürteltrommel 2 ist kammartig ausgebildet, d.h. zwischen jeweils zwei Segmenten 6 befindet sich eine Lücke 7. Die Segmente 6 sind in radialer Richtung expandierbar.

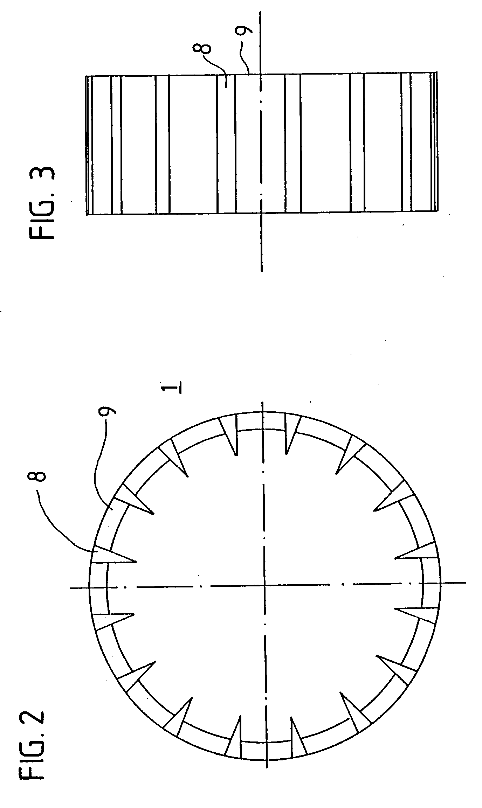

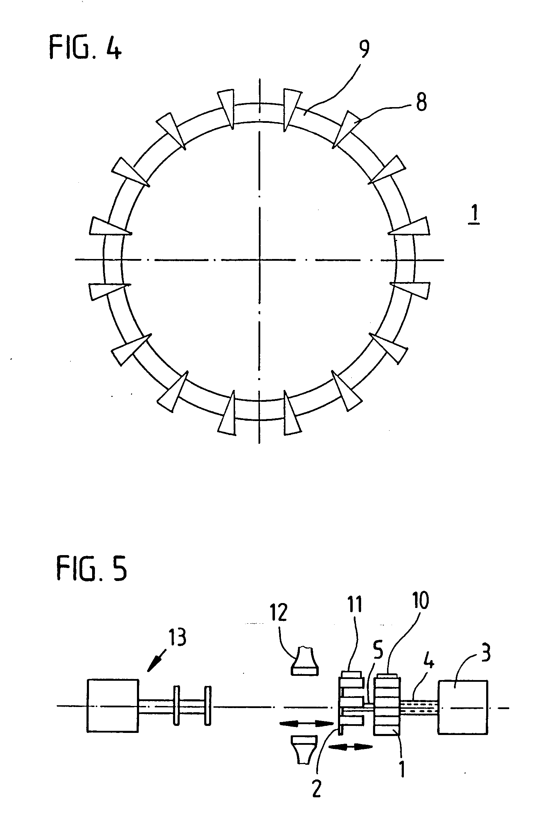

Die feststehende erste Trommel 1 kann entsprechend dem Beispiel der Fig. 2 bis 4 ausgebildet sein. Sie weist eine erste Gruppe von Segmenten 8 und eine zweite Gruppe von Segmenten 9 auf. Die Segmente 9 stehen auf Höhe der Segmente 6 der zweiten Trommel 2 und sind so weit nach radial innen verfahrbar, daß sie beim Ineinanderfahren der beiden Trommeln 1 und 2 den Segmenten 6 der Trommel 2 Platz machen. Die Segmente 8 der Trommel 1 können feststehend ausgebildet sein, sollten jedoch zweckmäßigerweise auch radial verschiebbar sein, um die Trommel für Gürtelpakete unterschiedlicher Dimensionen einsetzbar zu machen. Fig. 4 zeigt die Trommel 1 in einem Zustand mit radial eingefahrenen Segmenten 9.

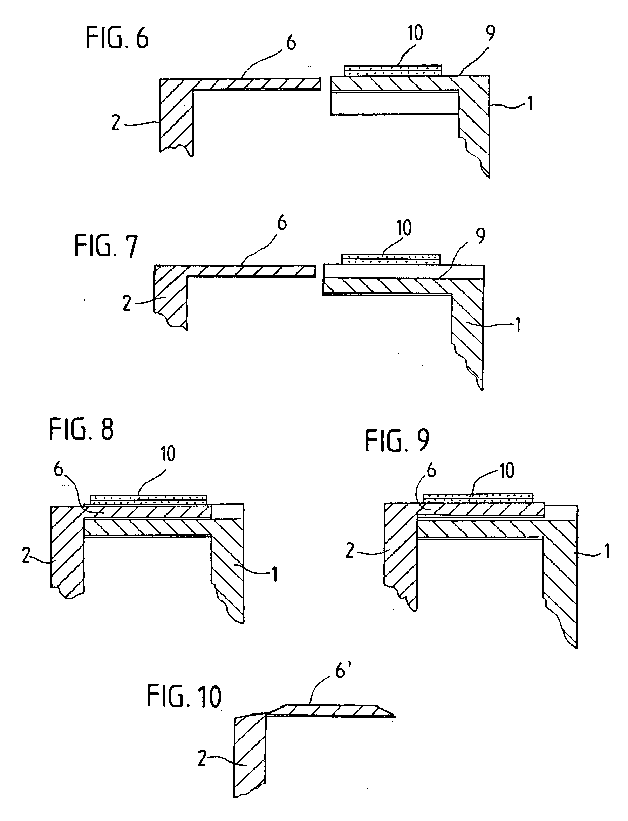

Fig. 5 zeigt die Gürtelaufbaustation mit einer Übergabestation und einer Bombierstation in einer Schemaskizze. Anhand der Fig. 5 und der weiteren Fig. 6 bis 9 sollen nachstehend die einzelnen Verfahrensabläufe zur Herstellung eines Gürtelpakets näher erläutert werden. Der gesamte Verfahrensablauf verläuft in der Weise, daß zunächst auf der Trommel 1 die einzelnen Lagen eines Gürtels gewickelt werden. Anschließend fährt die Trommel 2 axial in die Trommel 1 hinein und übernimmt das Lagenpaket 10. Nachdem die übernehmende Trommel 2 mit dem Lagenpaket 10 aus der Trommel 1 herausgefahren ist, wird das Lagenpaket 10 durch eventuelles Aufwickeln weiterer Festigkeitsträgerbandagen und durch abschließendes Aufbringen des Laufstreifens zu einem endgültigen Gürtelpaket 11 vervollständigt. Statt des Wickelns von Abdeckbandagen können auf der Trommel 2 auch sogenannte endlose Spulbandagen erzeugt werden, die durch Wickeln eines Fadens oder schmalen Bandes in zahlreichen nebeneinanderliegenden Windungen hergestellt werden. Da die beiden Trommeln 1 und 2 unabhängig voneinander antreibbar sind, kann während der Vervollständigung des Gürtelpakets auf der Trommel 2 gleichzeitig auf der Trommel 1 das nächste Lagenpaket durch Wickeln der Einzellagen erzeugt werden. Nach der Vervollständigung des Gürtelpakets 11 auf der Trommel 2 übernimmt ein Transferring 12 das Gürtelpaket 11 und überbringt es zu einer Bombierstation, wo in nicht gezeichneter Weise eine Karkasse in das Gürtelpaket 11 hineinbombiert wird.

Nachfolgend sollen die Einzelheiten des Herstellungsverfahrens für ein Gürtelpaket anhand der Fig. 6 bis 9 näher erläutert werden. In Fig. 6 sind die beiden Gürteltrommeln 1, 2 in einem Zustand dargestellt, bei dem sie axial auseinandergefahren sind und sich die Trommel 1 in einem expandierten Zustand befindet, während die Trommel 2 radial geringfügig eingefahren ist. Durch Rotieren der Trommel 1 wird auf ihrem Mantel mit den Segmenten 8 und 9 ein Lagenpaket 10 aus einzelnen Gürtellagen aufgebaut. Im vorliegenden Beispiel handelt es sich um einen zweilagigen Gürtel. Anschließend werden die Segmente 9 nach radial innen verfahren (vlg. Fig. 7). Danach fährt die Trommel 2 axial in die Trommel 1 hinein, wobei die Segmente 6 in die freigewordenen Räume eintauchen, die vorher von den Segmenten 9 eingenommen worden waren. Auf der anderen Seite tauchen die Segmente 8 der Trommel 1 in die Lücken 7 der Trommel 2 (Fig. 8). Anschließend wird die Trommel 2 expandiert (Fig. 9), wobei die Segmente 6 das Lagenpaket 10 erfassen. Danach fährt die Trommel 2 mit dem Lagenpaket 10 axial aus der Trommel 1 heraus, und die Segmente 9 der Trommel 1 werden wieder nach radial außen verfahren. Nunmehr kann auf der Trommel 1 ein erneutes Wickeln eines Lagenpaketes 10 beginnen, während auf der Trommel 2 das Lagenpaket 10 durch eventuelles Aufwickeln von weiteren Festigkeitsträgerbandagen und durch schließliches Aufbringen eines Laufstreifens zu einem Gürtelpaket 11 vervollständigt wird. Wenn das Gürtelpaket 11 auf der Trommel 2 fertig ist, wird es in beschriebener Weise vom Transferring 12 zu einer Bombierstation 13 transferiert, wo eine Karkasse hineinbombiert wird. Statt des Expandierens der Trommel 2 zum Erfassen des Lagenpakets 10 kann auch die Trommel 1 ihre Segmente geringfügig einfahren, so daß dann die Trommel 1 z.B. mittels bekannter Haltemagnete das Lagenpaket 10 ebenfalls erfassen kann. Weiterhin sollte darauf hingewiesen werden, daß die Trommel 1 im Falle einer Vielzahl von Segmenten (ca. ab 70) ebenfalls kammartig ausgebildet sein kann, d.h. es kann dann auf die Segmente 9 verzichtet werden.

Es kann zweckmäßig sein, die zweite Gürteltrommel 2 mit anders geformten Segmenten 6' zu versehen, z.B. mit solchen, die einen zylindrischen Mittelabschnitt mit größerem Durchmesser und kegelige Randabschnitten aufweisen. Statt der kegeligen Abschnitte kann man bei Bedarf auch kugelförmige vorsehen.

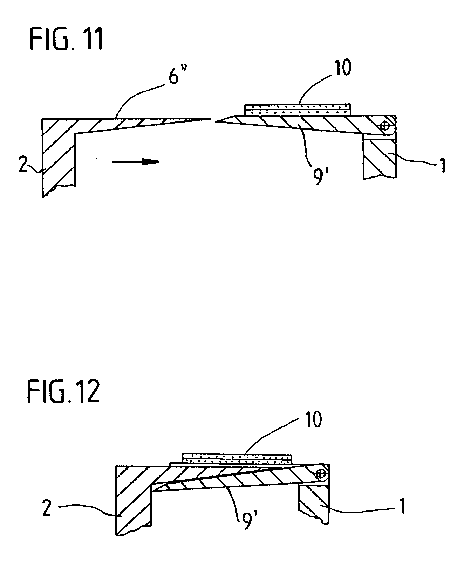

In den Fig. 11 und 12 ist eine weitere Variante zweier Gürteltrommeln 1 und 2 dargestellt. Die Gürteltrommel 1 zur Erzeugung eines Lagenpaketes 10 weist dabei schwenkbare Segmente 9' auf, während die Trommel 1 wieder kammartig ausgebildet und weiterhin mit im Querschnitt dreieckigen Segmenten 6'' ausgestattet ist, die wiederum geringfügig radial expandierbar sind. Beim Zusammenfahren der Trommeln 1 und 2 schwenken die Segmente 9' nach innen. Alle anderen Verfahrensabläufe gelten entsprechend den vorstehend beschriebenen.

**Patentansprüche**

1. Verfahren zur Herstellung von Gürtelpaketen für Fahrzeugluftreifen, **dadurch gekennzeichnet,** daß die einzelnen Lagen eines Gürtels auf einer ersten Gürteltrommel aufgewickelt werden, daß danach eine zweite Gürteltrommel und die erste Gürteltrommel axial ineinandergebracht werden, daß die Segmente der zweiten Gürteltrommel das Lagenpaket erfassen, daß anschließend die beiden Gürteltrommeln voneinander entfernt werden, daß auf der ersten Gürteltrommel ein weiteres Lagenpaket erzeugt wird und daß gleichzeitig auf der zweiten Gürteltrommel das erste Lagenpaket durch eventuelle weitere Bandagen und schließlich durch den Laufstreifen zu einem kompletten Laufstreifen/Gürtelpaket vervollständigt wird, das durch bekannte Mittel zum Aufbau eines Reifenrohlings oder zur Zwischenlagerung übernommen wird.

2. Verfahren nach Anspruch 1, dadurch gekennzeichnet, daß die zweite Gürteltrommel axial in die erste, feststehende Trommel hineinfährt und nach übernahme des Lagenpakets aus dieser herausbewegt wird.

3. Verfahren nach Anspruch 1, dadurch gekennzeichnet, daß das Lagenpaket von einer zweiten Gürteltrommel mit konturierten Segmenten übernommen wird.

4. Gürteltrommel-Vorrichtung zur Durchführung des Verfahrens nach Anspruch 1, dadurch gekennzeichnet, daß sie eine erste Trommel (1) zum Aufwickeln der Lagen eines Gürtels aufweist, daß sie mit einer zweiten Trommel (2) zur Übernahme und Vervollständigung des Lagenpakets (10) zu einem Gürtelpaket (11) ausgestattet ist, daß die beiden Trommeln (1, 2) durch axiales Verfahren von zumindest einer zur Übernahme eines Lagenpakets (10) ineinanderfahrbar sind und daß die beiden Trommeln (1, 2) unabhängig voneinander antreibbar sind.

5. Vorrichtung nach Anspruch 4, dadurch gekennzeichnet, daß die erste Trommel (1) zum Aufwickeln der Lagen eines Gürtels axial feststehend ausgebildet ist und daß die zweite Trommel (2) zur Übernahme eines Lagenpakets (10) axial verfahrbar ist.

6. Vorrichtung nach Anspruch 4 oder 5, dadurch gekennzeichnet, daß die zweite Trommel (2) kammartig in dem Sinne ausgebildet ist, daß zwischen jeweils zwei Segmenten (6) eine Lücke (7) besteht, in die ein Segment (8) der ersten Trommel (1) eingreifen kann.

7. Vorrichtung nach Anspruch 4 oder 5, dadurch gekennzeichnet, daß die Segmente (9) der ersten Trommel (1), die auf Höhe der Segmente (6) der zweiten Trommel (2) liegen, radial nach innen verschiebbar oder wegklappbar sind.

8. Vorrichtung nach Anspruch 4 oder 5, dadurch gekennzeichnet, daß alle Segmente (6, 8, 9) der beiden Trommeln (1, 2) zur Dimensionseinstellung radial verfahrbar sind.

9. Vorrichtung nach Anspruch 4 oder 5, dadurch gekennzeichnet, daß die Segmente (6') der zweiten Trommel (2) im Mittelbereich zylinderförmig und in den Randabschnitten kegelig oder kugelförmig ausgebildet sind.

10. Vorrichtung nach Anspruch 4 oder 5, dadurch gekennzeichnet, daß Segmente (9') der ersten Trommel schwenkbar sind.

FIG.1

FIG. 3

FIG. 2

FIG. 4

FIG. 5

FIG. 6

FIG. 7

FIG. 8

FIG. 9

FIG. 10

FIG. 11

FIG.12